# EUROPEAN PATENT SPECIFICATION

(11) **EP 2 773 049 B1**
(45) Date of publication and mention of the grant of the patent: **15.07.2020**
(21) Application number: 11874828.4
(22) Date of filing: 24.10.2011
(51) Int. Cl.: H04B 3/50

(54) **POWER SUPPLY FOR TWO-WIRE COMMUNICATION LINE**
STROMVERSORGUNG FÜR ZWEIADRIGE KOMMUNIKATIONSLEITUNG
SOURCE D'ALIMENTATION D'UNE LIGNE DE COMMUNICATION À DEUX FILS

(43) Date of publication of application: 03.09.2014
(73) Proprietor: Ovchinnikov, Valery Vasilievich, Moscow, 125583 (RU)
(72) Inventor: Ovchinnikov, Valery Vasilievich, Moscow, 125583 (RU)
(74) Representative: Manasse, Uwe
(86) International application number: PCT/RU2011/000825
(87) International publication number: WO 2013/062432

(56) References cited:
- GB-A- 2 154 834
- RU-C2- 2 247 469
- SU-A1- 1 336 258
- US-A1- 2008 008 262
- US-A1- 2011 131 455
- V. E. KITAEV ET AL.: 'Proektirovanie istochnikov elektropitaniya ustroistv svyazi.' SVIAZ 1972, MOSCOW, IZDATELSTVO, page 77, 78, XP008173542
- B. N. IVANCHUK ET AL.: 'Parametricheskie stabilizatory napryazheniya na poluprovodnikovykh priborakh i magnitnykh usilitelyakh.' ENERGIA vol. 21, 1971, MOSCOW, pages 31 - 34, XP008173478

## Description

The invention relates to the design of power supplies of two-wire communication line intended for transmission of signals between electronic devices, as well as for transmission of signals between electronic devices and for supplying them with power.

A power supply of communication line between electronic devices is known for transmission of signals from a transmitter to a receiver, this power supply being combined with the transmitter. The power supply of communication line is available in the three-pole or double-pole version as applied to the three-wire, or two-wire version of communication line, respectively. The device is known as applied to the RS-485 interface ("IBM PC hardware". Encyclopedia. S-Pb, "Piter" publishing house, 2001, p. 351).

The shortcoming of the known power supply of RS-485 communication line lies in the fact that it is impossible to power supply electronic devices from communication line. This would require incorporation of communication line power supplies in the design of each electronic device and will make the equipment more expensive. Besides, separate supplying of power to devices, with communication being long, leads to mismatch of potentials of their common bus, which may result in electrical breakdown and failure of devices. To prevent breakdown, devices are galvanically decoupled from the communication line, which makes the equipment even more expensive.

The closest in terms of technical essence and result achieved is the power supply of communication line MicroLAN (www.maxim-ic.com, Silicon Serial Number DS2401). One of the poles of the known power supply is connected to the common bus and to one of the wires of the two-wire communication line, while the other pole is connected to the second wire of the two-wire communication line through a limiting resistor. An example of prior art can be found in GB2154834.

The power supply of communication line MicroLAN makes it possible to power supply a large number of devices from communication line, which reduces the cost of the equipment.

The shortcoming of the known power supply of communication line MicroLAN is its low noise immunity in the course of transmission of signals. This is determined by different conditions of current flow in the line wires related to availability of a limiting resistor in one of the wires of the communication line, which contributes to arising of noise voltage under the effect of electromagnetic fields.

In spite of the fact that noise affects both of the communication line wires in the same way, the results of the effect are different, as different are conditions of noise propagation in the communication line wire connected to the common bus, and in the second wire connected through a limiting resistor. The value of current created by noise in the wire connected to the common bus is determined by the wire resistance only. In the second wire of communication line, the noise current is significantly lower as this is determined by the sum of resistances of the wire and the limiting resistor. As a result, though the effect of noise on the communication line wires is the same, the noise voltage drops on the communication line wires are different, with a potential difference arising between the communication line wires, which prevents appropriate transmission of desired signal.

The term "common bus" is understood as a hypothetic point, which is generally physically implemented in the form of a wire, and relative to which the value of potential of all the other parts and components of electronic device is measured.

A conventional solution for reducing the effect of noise is installation of frequency filters in the receiver to prevent the noise signal, its frequency being different from that of the desired signal, from getting to the receiver. However, this makes the design of the signal receiver more expensive; moreover, this method would not work for frequencies close to the frequency of the desired signal. It would be more efficient to prevent noise from getting into the communication line altogether, rather than suppress the noise signal that has already penetrated into the communication line.

Within this application, the problem is solved of raising noise immunity in the course of transmission of electric signals in communication line; at the same time, the design is made more simple, and electronic devices connected to the communication line - receivers and transmitters - are made cheaper owing to improvement of the design of the power supply of the communication line, which ensures automatic compensation of the noise signal in both of the communication line wires. The problem is solved of development of such a design of the power supply, which would not allow penetration of the noise signal as such into the communication line wires, thus ensuring protection of all the electronic devices connected to the communication line, their cost reduced.

The specified objective of this invention is implemented in a number of embodiments of power supply.

In one of the embodiments of power supply, the specified objective is solved in that, in a power supply of two-wire communication line intended for transmission of signals between electronic devices, as well as for transmission of signals between electronic devices and for supplying them with power, which comprises a two-pole primary power supply, the above power supply further comprises a two-pole secondary power supply, its poles connected to wires of the communication line, and to eponymous poles of the primary power supply through resistors of the same value.

Preferably, the two-pole primary power supply has a voltage exceeding the voltage of the secondary power supply by a value of at least 0.1V, where a stabilitron is incorporated as a two-pole secondary power supply.

In another embodiment of power supply, the specified objective is achieved in that the aforesaid power supply of the two-wire communication line comprises two poles connected to the communication line wires, and a common bus, where the poles of the aforesaid power supply are connected to the common bus through resistors of the same value.

The essence of the invention is clarified in graphic materials including the following drawings:
**Fig.1** is the schematic electrical diagram of the preferred embodiment of power supply, where the poles of the two-pole secondary power supply are connected to the communication line wires, as well as to eponymous poles of the primary power supply through resistors of the same value.
**Fig. 2** is the schematic electrical diagram of the preferred embodiment of power supply, where a stabilitron is incorporated as a two-pole secondary power supply.
**Fig. 3** is the schematic electrical diagram of the preferred embodiment of power supply, where the poles of the power supply are connected to the common bus through resistors of the same value.

For disclosure of the essence of the invention, the following conventional designations are used in the drawings: **1** - power supply; **2** - primary power supply; **3, 4** - resistors of the same value; **5** - secondary power supply; **6** - two-wire communication line; **7, .... N** - receivers; **8, ...M** - transmitters; **9** - common bus.

The essence of embodiments of power supply of two-wire communication line lies in the following.

In the claimed power supply of two-wire communication line, conditions of transmission of electric signals are the same in the both wires of communication line, as for each wire of the communication line, the resistance between the point of noise influence and the relevant pole of the primary power supply are the same owing to availability of resistors of the same value. Therefore, the voltage of in-phase noise signal is compensated throughout the communication line, the voltage in the line contains no noise signal and does not corrupt the transmitter signal. Here, the level of the noise signal in the line becomes thousands of times lower. The claimed power supply enables to exercise communication even in conditions, where, with the prototype power supply used, the noise voltage is well above the desired signal.

The basic idea of the device is in preventing the noise signal from penetrating into the communication line wires, rather than conventional suppression of in-phase noise signal induced to the communication line wires (which is usually achieved by means of frequency filters incorporated in the signal receiver). At the same time, while in case of using conventional methods of noise suppression, each of the devices connected to the communication line protects itself, in the claimed invention, though noise protection is created in the power supply, this protects all the other devices connected to the communication line, i.e., receivers, transmitters.

The essence of the claimed power source of two-wire communication line ensuring compensation of noise signal in the course of long-distance signal transmission, with transmitters and receivers power-supplied from the communication line, is clarified by nonlimiting examples of its implementation.

### Example 1.

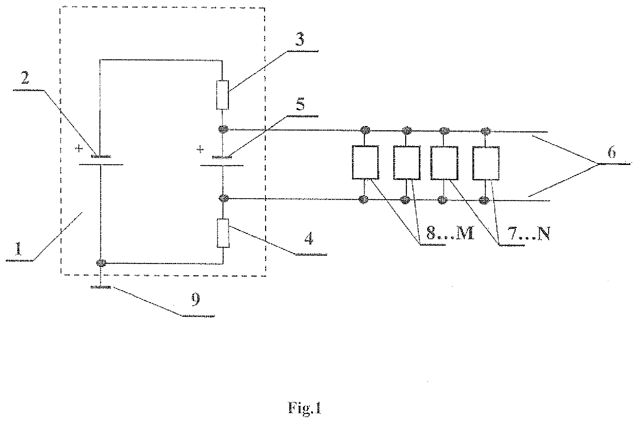

In power supply **1,** connected to poles of two-pole primary power supply **2** in the form of storage battery of voltage 12V through equal resistors **3** and **4** of resistance 1 kOhm are eponymous poles of two-pole secondary power supply **5** in the form of storage battery of voltage 6V, and wires of communication line **6** implemented in the form of the so-called "twisted pair" (see **fig.1**). Connected to wires of communication line **6** are electronic devices: receivers **7...N** and transmitters **8...M,** which are power supplied from communication line **6** and communicate signals between each other. If necessary, the negative pole of primary power supply **2** is connected to common bus **9** of the device.

Transmitters **8...M** are microprocessors with an output cascade in the form of microprocessor-controlled key connected in parallel to communication line **6.**

The usual state of communication line **6** corresponds to transmission of logical unit; at the same time, the voltage in the communication line has the maximum value, close to secondary power supply - 6V. The logical zero is formed by transmitters **8...M** through closing communication line **6** with a key (not shown).

The wires of communication line **6** are placed into an electromagnetic field generating noise; alternatively, in-phase noise voltage is supplied from a generator into the both wires of communication line **6.** The voltage of noise between the wires of communication line **6** is measured in its different sections.

For simulation of conditions of noise propagation in the prototype (for the purpose of comparison) resistor **4** is closed. The voltage of noise between the wires of communication line **6** is measured in its different sections.

In the claimed device, as a result of compensation, the noise voltage is thousands of times lower than the noise voltage in the prototype.

In example 1, the voltage of primary power supply **2** may be higher than, equal to, or lower than the voltage of secondary power supply **5.** At the same time, parameters of the device, and results of the noise voltage measurements remain unchanged.

### Example 2.

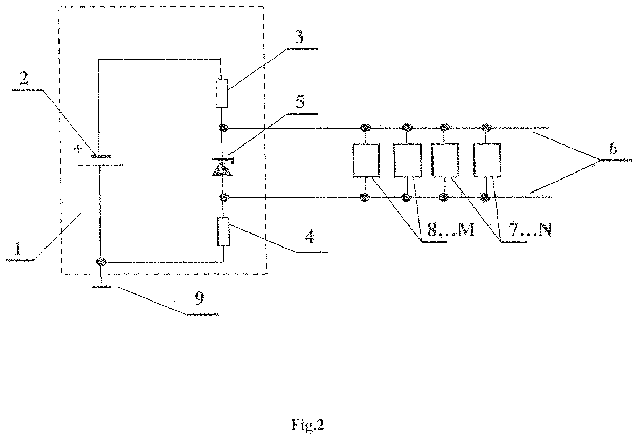

In power supply **1**, connected to poles of two-pole primary power supply **2** in the form of storage battery of voltage 12V through equal resistors **3** and **4** of resistance 100 Ohm are outputs of secondary power supply **5** in the form of stabilitron of voltage 5.6V, and wires of communication line **6** implemented in the form of the so-called "twisted pair" (see **fig.2**). Connected to wires of communication line **6** are electronic devices: receivers **7...N,** and transmitters **8...M,** which are power-supplied from communication line **6** and communicate signals between each other. If necessary, the negative pole of primary power supply is connected to common bus **9** of the device.

For normal operation of the stabilitron, and for provision of power supply to receivers **7...N** and transmitters **8...M**, the voltage of primary power supply **2** exceeds the working voltage of stabilitron **5** by 3.4V and is equal to 9V.

The logical zero is formed by transmitters **8...M** by means of closing of communication line **6** with a key (not shown).

The wires of communication line **6** are placed into an electromagnetic field generating noise; alternatively, in-phase noise voltage is supplied from a generator into the both wires of communication line **6.** The voltage of noise between the wires of communication line **6** is measured in its different sections.

For simulation of conditions of noise propagation in the prototype (for the purpose of comparison) resistor **4** is closed. The voltage of noise between the wires of communication line **6** is measured in its different sections.

In the claimed device, as a result of compensation, the noise voltage is thousands of times lower than the noise voltage in the prototype.

### Example 3.

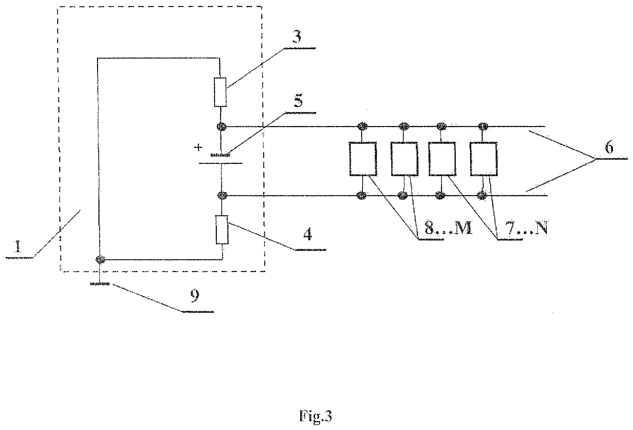

In power supply **1**, connected to poles of two-pole power supply **5** in the form of storage battery of voltage 6V are wires of communication line **6** implemented in the form of the so-called "twisted pair" and equal resistors **3** and **4** of resistance 1 kOhm, the second outputs of which are closed between each other and are connected to common bus **9** of the device (see **fig.3**). Connected to wires of the line are electronic devices: receivers **7...N** and transmitters **8...M,** which are power supplied from communication line **6** and communicate signals between each other.

The wires of communication line **6** are placed into an electromagnetic field generating noise; alternatively, in-phase noise voltage is supplied from a generator into the both wires of communication line **6.** The voltage of noise between the wires of communication line **6** is measured in its different sections.

For simulation of conditions of noise propagation in the prototype (for the purpose of comparison) resistor **4** is closed. The voltage of noise between the wires of communication line **6** is measured in its different sections.

In the claimed device, as a result of compensation, the noise voltage is thousands of times lower than the noise voltage in the prototype.

Advantages of the invention are determined by the fact that, as a result of compensation of noise voltage in the communication line wires, the noise level becomes thousands of times lower. This enables to increase the range and reliability of communication between transmitters and receivers connected to the communication line, through raising noise immunity.

Making the design simpler and cheaper is achieved owing to the fact that it is not required to install power supplies in each receiver and transmitter, or to install frequency filters therein. The design of the power supply prevents the very penetration of the noise signal into the wires of the communication line, thus ensuring protection of all the electronic devices connected to the communication line, their cost reduced.

## Claims

1. A power supply (1) of two-wire communication line (6) adapted for transmission of signals between electronic devices, as well as for transmission of signals between electronic devices and for supplying them with power, which comprises a two-pole primary power supply (2),**characterized in that** the aforesaid power supply (1) further comprises a two-pole secondary power supply (5), its poles connected to the wires of the two-wire communication line, as well as to eponymous poles of the primary power supply through resistors of the same value.

2. The power supply (1) of claim 1 **characterized in that** the primary power supply (2) has a voltage exceeding the voltage of the two-pole secondary power supply (5) by a value of at least 0.1 V; where a stabilitron is incorporated as a two pole secondary power supply (5).

## Patentansprüche

1. Leistungsversorgung (1) einer Zweidraht-Kommunikationsleitung (6), die zur Übertragung von Signalen zwischen elektronischen Vorrichtungen sowie zur Übertragung von Signalen zwischen elektronischen Vorrichtungen und deren Versorgung mit Leistung ausgebildet ist, die eine zweipolige Primärleistungsversorgung (2) umfasst, **dadurch gekennzeichnet, dass** die Leistungsversorgung (1) ferner eine zweipolige Sekundärleistungsversorgung (5) umfasst, deren Pole mit den Drähten der Zweidraht-Kommunikationsleitung sowie mit gleichnamigen Polen der Primärleistungsversorgung über Widerstände mit demselben Wert verbunden sind.

2. Leistungsversorgung (1) nach Anspruch 1, **dadurch gekennzeichnet, dass** die Primärleistungsversorgung (2) eine Spannung aufweist, die die Spannung der zweipoligen Sekundärleistungsversorgung (5) um einen Wert von mindestens 0,1 V überschreitet; wobei ein Stabilitron als eine zweipolige Sekundärleistungsversorgung (5) integriert ist.

## Revendications

1. Source d'alimentation en puissance (1) d'une ligne de communication à deux fils (6), prévue pour la transmission de signaux entre des dispositifs électroniques, ainsi que pour la transmission de signaux entre des dispositifs électroniques et pour leur alimentation en puissance, comprenant une source d'alimentation en puissance primaire à deux pôles (2), **caractérisée en ce que** ladite source d'alimentation en puissance (1) comprend en outre une source d'alimentation en puissance secondaire à deux pôles (5), ses pôles étant connectés aux fils de la ligne de communication à deux fils, ainsi qu'à des pôles éponymes de la source d'alimentation en puissance primaire par le biais de résistances de même valeur.

2. Source d'alimentation en puissance (1) selon la revendication 1, **caractérisée en ce que** la source d'alimentation en puissance primaire (2) présente une tension dépassant la tension de la source d'alimentation en puissance secondaire à deux pôles (5) d'une valeur d'au moins 0,1 V ; un stabilitron étant incorporé sous forme de source d'alimentation en puissance secondaire à deux pôles (5).
